# EUROPEAN PATENT SPECIFICATION

(11) **EP 3 092 114 B1**
(45) Date of publication and mention of the grant of the patent: **14.03.2018**
(21) Application number: 15704848.9
(22) Date of filing: 09.01.2015
(51) Int. Cl.: B29C 35/16, C10C 3/16, B29C 39/38, B29K 95/00

(54) **COOLING UNIT FOR BITUMINOUS MEMBRANES, PRODUCTION PLANT COMPRISING SAID COOLING UNIT, AND CORRESPONDING PRODUCTION METHOD**
KÜHLEINHEIT FÜR BITUMENBAHNEN, PRODUKTIONSANLAGE MIT DERARTIGER KÜHLEINHEIT UND UND ENTSPRECHENDES HERSTELLUNGSVERFAHREN
UNITÉ DE REFROIDISSEMENT POUR DES MEMBRANES BITUMINEUSES, INSTALLATION DE PRODUCTION COMPRENANT LADITE UNITÉ ET PROCÉDÉ DE RÉALISATION CORRESPONDANT

(30) Priority: 10.01.2014 IT UD20140007
(43) Date of publication of application: 16.11.2016
(73) Proprietor: Boato International S.p.A. A Socio Unico, 34074 Monfalcone (IT)
(72) Inventor: PASTORUTTI, Gino, I-33057 Palmanova (IT)
(74) Representative: Petraz, Gilberto Luigi
(86) International application number: PCT/IB2015/050177
(87) International publication number: WO 2015/104682

(56) References cited:
- GB-A- 600 685
- US-A- 4 470 203

## Description

### FIELD OF THE INVENTION

The present invention concerns a cooling unit for a plant that produces bituminous membranes, which can be used, for example, to cover buildings, floors or in general to waterproof civil engineering works, or to waterproof electric equipment, pneumatic plants, hydraulic plants or similar, or again in acoustic insulation applications.

By bituminous membranes, here and hereafter in the description and claims, prefabricated waterproofing membranes of a bituminous mix are also included.

The present invention also concerns the plant to produce bituminous membranes comprising the cooling unit and the method to produce said bituminous membranes.

### BACKGROUND OF THE INVENTION

Waterproofing bituminous membranes are known, used merely by way of example, non-restrictive of the present invention, for covering roofs of condos, industrial warehouses and private homes, or for insulating electric apparatuses, hydraulic or pneumatic plants or suchlike.

The production plants for such bituminous membranes commonly comprise an impregnation unit configured to impregnate a support, also called reinforcement, with a bituminous material, or bituminous mix, such as oxidized bitumen, distilled bitumen or modified bitumen.

The support can be made for example of polyester or fiber glass.

The bituminous material, when applied to the support, is in a viscous state and at a high temperature which, in the case of modified bitumen, is about 160°-190°C.

The bituminous membrane, once obtained, is wound into coils by a winding unit provided in the production plant.

Before entering into the winding unit, the bituminous membrane has to be cooled, indicatively to a temperature of about 35°C - 40°C, to prevent the various layers of bituminous membrane from adhering to each other, which could possibly damage the bituminous membrane when the coil is unwound.

Between the impregnation unit and the winding unit a cooling unit is normally provided, configured to cool the bituminous membrane and to prevent the above problems.

Known cooling units usually use tanks, belts and rolls provided with an external circumferential surface that is cooled so as to cool the bituminous membrane through direct contact.

One disadvantage of such cooling units is that, to obtain the desired cooling to a temperature of 35°-40°C, very long times are required. This is due to the fact that, as the temperature of the bituminous membrane gradually decreases toward the value of ambient temperature, which for example is on average about 25°C, the cooling times become longer, given a fixed temperature of the cooling rolls.

The increase in the cooling times leads to a reduction in the overall productivity of the plant to produce the bituminous membrane.

Cooling units are also known, for example from documents US-A-4.470.203 that discloses the pramble of claim 1 and the preamble of claim 12 and GB-A-600.685, which use air/water spray devices configured to lower the temperature of the bituminous membrane. The spray devices act directly on, or are installed facing directly toward, the external surface of the membrane which, to prevent problems in winding, must then be dried using other devices, such as ventilators or air blades.

In order to dry the bituminous membrane, it is therefore necessary to wait while it dries, and/or to provide a dedicated drying unit: in both cases the overall production times of the bituminous membrane are extended, an increase in the overall bulk of the machine is required, and an increase in the cost of both the initial set-up and of management.

In particular, document US-A-4.470.203 comprises a plurality of cooling devices using water and air sprays, each configured to spray particles of water dissolved in air which, on contact with the hot bituminous membrane, evaporate and cool it.

Spray devices using water and air are particularly effective only for rather high temperatures of the bituminous membrane, that is, about 100°C or more. If the temperatures of the bituminous membrane are lower, that is, around 55°C-60°C, this cooling method is particularly inefficient.

In fact, in these conditions, it is particularly difficult to cause the water sprayed onto the bituminous membranes to evaporate and, on the contrary, temperatures around 55°C make the bituminous membrane even more unsuited for winding onto coils due to its high adhesive capacity, since the sprayed water has particles with sizes of more than 50 micron.

The particles have a high steam tension and are therefore difficult to vaporize.

Even if the cooling capacity of the water and air spray devices is increased, for example by increasing the flow rate of the particles, these latter, also due to their great size, wet the surface of the bituminous membrane, with the disadvantages described above. Furthermore, the film of liquid that is deposited on the surface of the bituminous membrane generates an insulating layer that further reduces the cooling efficiency.

To prevent these disadvantages, US-A-4.470.203 provides that, downstream of the cooling unit, or possibly downstream of each water and air spray device, there are detectors to detect the humidity on the surface of the membrane. If the humidity detector detects that the membrane is wet, the action of the spray devices is adjusted, to reduce the flow rate of the fluid. However, this known solution, which directly measures the humidity on the surface of the membrane, is not able to ensure that the bituminous membrane is not wet, since the detection and the possible adjustment interventions are carried out when the membrane is already wet.

One purpose of the present invention is to obtain a cooling unit for bituminous membranes that allows to cool the bituminous membranes quickly, in order to make them suitable for subsequent winding into coils.

Another purpose of the present invention is to obtain a cooling unit for bituminous membranes that is efficient and inexpensive, both in terms of equipment and in terms of management.

Another purpose of the present invention is to obtain a production plant and a corresponding production method that allow to reduce the overall production times of the bituminous membranes. Another purpose of the present invention is to perfect a production method for bituminous membranes that is efficient and which allows to cool the bituminous membranes quickly.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns a cooling unit for bituminous membranes, usable for example but not exclusively, for covering buildings, floors or in general for waterproofing civil engineering works, or electric apparatuses, pneumatic or hydraulic plants or suchlike, and in acoustic insulation applications.

According to one feature of the present invention, the cooling unit comprises a substantially closed cooling chamber, through which, during use, at least one bituminous membrane is made to transit, and at least a nebulization member configured to nebulize a fluid and to deliver it into the cooling chamber in the form of mist and with a delivery pressure of at least 50bar so as to cool the bituminous membrane.

The effect of nebulizing the fluid, combined with said delivery pressure value, allows to speed up the cooling of the bituminous membrane, the duration of which, in current plants, is a bottleneck for the production times of the bituminous membrane.

The high-pressure nebulization of the fluid, unlike spraying water and air as described in the state of the art, is able to supply particles with extremely limited sizes, which are easy to vaporize.

In this way it is possible to obtain a cooling unit that is also particularly effective for cooling bituminous membranes, which at entry have temperatures lower than 60°C and are difficult to treat with traditional plants.

In particular, it is also possible to cool bituminous membranes that are entering into the cooling unit at a temperature near to ambient temperature.

Nebulization consists of diffusing a liquid, possibly combined with a gas, into micro-drops, that is, drops with a diameter in the order of a few micrometers or a few tens of micrometers, generated by the nebulization member thanks to the high pressure. Merely by way of example, and according to a possible form of embodiment, the nebulization member is configured to deliver particles of fluid with sizes less than 20 micron.

Thanks to their reduced size, and exploiting the latent heat of vaporization, micro-drops allow to reduce the temperature of the bituminous membrane quickly.

Furthermore, the reduced sizes of the micro-drops allow them to evaporate quickly as soon as they contact the bituminous membrane. The rapid evaporation prevents the bituminous membrane from getting wet.

Forms of embodiment of the present invention also concern a plant to produce bituminous membranes which comprises the cooling unit.

The present invention also concerns a method to produce a bituminous membrane that comprises:
- a step of applying a bituminous material on a support to obtain a bituminous membrane, said bituminous material being maintained at a temperature higher than the melting temperature;
- a step of cooling the bituminous membrane that provides to make at least one bituminous membrane transit in a cooling chamber, and to nebulize and subsequently deliver into the cooling chamber a fluid in the form of mist and with a delivery pressure of at least 50bar in order to cool the bituminous membrane;
- a step of winding the cooled bituminous membrane around a winding roll.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a schematic view of some forms of embodiment of a plant to produce bituminous membranes according to the present invention;
- fig. 2 is a schematic view of some forms of embodiment of a cooling unit for bituminous membranes according to the present invention.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawings. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

The attached drawings are used to describe forms of embodiment of a cooling unit 11 for bituminous membranes 20, usable for example for covering buildings, floors or in general for waterproofing civil engineering works, electric apparatuses, pneumatic or hydraulic plants or suchlike, and in acoustic insulation applications.

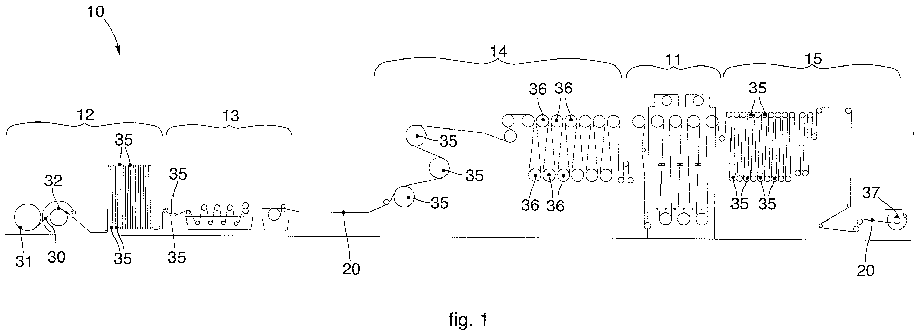

Fig. 1 is used to describe a cooling unit 11 inserted in a production plant 10, configured to produce the bituminous membranes 20.

The production plant 10 is configured to obtain at least one bituminous membrane 20 starting from a support 30, also known as reinforcement, to which a bituminous material is associated.

The support 30 can be in the form of tape or gauze, with the function of reinforcing the bituminous membrane 20.

The support 30 can be made of a textile material or an artificial material, such as fiber glass, carbon fiber or aramid fiber.

The production plant 10 can comprise an unwinding unit 12, configured at least to unwind the support 30 wound in a roll 31.

The production plant 10 also comprises an application unit 13, configured to apply the bituminous material on the support 30 and thus define the bituminous membrane 20.

In some forms of embodiment, the bituminous material can comprise for example oxidized bitumen, distilled bitumen or modified bitumen.

The application unit 13 can also be configured to maintain the bituminous material in a liquid state by providing heating means, not shown, able to heat and keep the bituminous material to/at a temperature higher than melting temperature.

The temperature at which the bituminous material is kept therefore varies depending on the melting temperature of the bituminous material used. For example, in the case of modified bitumen, the temperature can be comprised between 160°C and 190°C.

In some forms of embodiment, the production plant 10 comprises a winding unit 15 configured to wind the bituminous membrane 20 on a winding roll 37.

The production plant 10 is provided with suitable feed means configured to move first the support 30 and then the bituminous membrane 20 in the direction of movement that goes from the unwinding unit 12 to the winding unit 15.

The cooling unit 11 is typically interposed between the application unit 13 and the winding unit 15.

In this case, the unwinding unit 12 and the application unit 13 are located upstream of the cooling unit 11, while the winding unit 15 is located downstream of the cooling unit 11 with respect to the direction of movement.

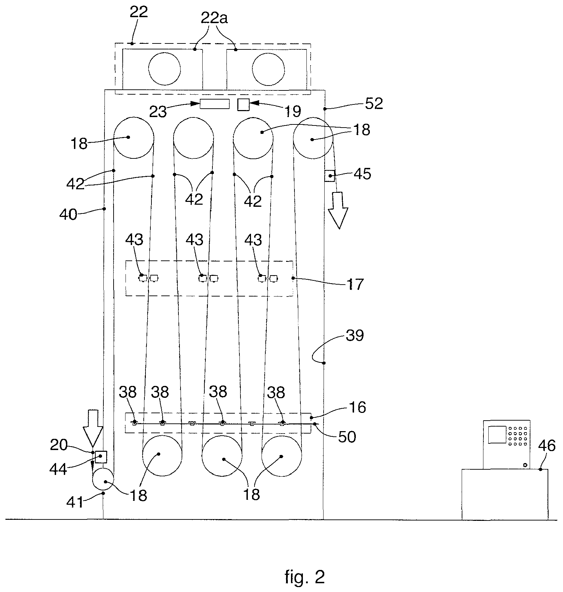

In forms of embodiment described with reference to fig. 2, the cooling unit 11 comprises at least a nebulization member 16 configured to nebulize a fluid inside the cooling chamber 40 and on at least one surface of the bituminous membrane 20 so as to cool it. In some forms of embodiment, the nebulization member 16 can obtain a high-pressure nebulization, for example more than 50 bar, preferably at least 70 bar or more. One form of embodiment can provide that the nebulization member 16 obtains a nebulization of the fluid at a pressure of up to 100 bar.

According to possible forms of embodiment of the present invention, the nebulization members 16 are configured to deliver the fluid in the form of mist. Merely by way of example it may be provided that the nebulization members 16 obtain a nebulization of the fluid to deliver particles with a size less than 20micron.

Delivering the fluid in the form of mist allows to obtain particles that, even with reduced temperatures of the membrane, can evaporate, thus removing heat and therefore reducing the temperature of the bituminous membrane.

According to another form of embodiment of the present invention, the nebulization member 16 is configured to nebulize only water.

In some forms of embodiment, the cooling unit 11 can comprise a cooling chamber 40 defining a substantially closed compartment 39 in which the bituminous membrane 20 is made to transit so as to cool it. The compartment 39 is also configured to hold inside it the fluid nebulized by the nebulization member 16.

The cooling chamber 40 prevents or at least reduces dispersions of the fluid to the outside of the cooling unit 11, and at the same time contributes to obtaining a favorable internal micro-climate, for example for the nebulization of the fluid on the surfaces of the bituminous membrane 20.

In a preferential form of embodiment, the nebulization inside the cooling chamber 40 may not be directly facing toward the surface of the bituminous membrane 20, but the nebulization member 16 nebulizes the fluid in a diffused manner inside the cooling chamber 40. This leads to a gradual cooling of the bituminous membrane 20 and at the same time prevents it from getting wet due to a localized delivery of micro-drops.

In some forms of embodiment, the cooling chamber 40 comprises an entrance aperture 41 and at least one exit aperture 52, configured to allow respectively the entrance and exit of the bituminous membrane 20 into/from the cooling chamber 40, and to keep the compartment 39 defined by the latter substantially closed.

In some forms of embodiment, the cooling unit 11 can comprise, inside the cooling chamber 40, a plurality of return rolls 18 that define return segments 42 of the bituminous membrane 20. To limit the sizes of the plant, in possible forms of embodiment, the return segments 42 are disposed approximately parallel to each other, in a direction substantially transverse with respect to the normal direction of feed of the bituminous membrane 20 in the plant.

According to a form of embodiment shown in fig. 2, the return segments 42 are disposed substantially vertical or sub-vertical.

According to a possible form of embodiment, which can be combined with the forms of embodiment described here, the nebulization member 16 is installed in correspondence with a lower portion of the return segments 42 of the bituminous membrane 20. In this way, the fluid delivered by the delivery elements 38, heating up due to the effect of the hot membrane 20, progressively moves toward the upper part of the cooling chamber 40 and carries out a homogenous cooling over the whole surface of the bituminous membrane 20.

According to possible solutions, the cooling unit 10 can comprise a plurality of nebulization members 16 disposed in different positions along the longitudinal extension of the return segments 42.

In possible implementations, the return rolls 18 are provided with a circumferential surface that during use is in contact with the bituminous membrane 20 and which is kept constantly cooled by suitable cooling means, to contribute to the cooling action of the membrane exerted by nebulization. The cooling means can for example comprise hydraulic or pneumatic feed circuits to feed cooling fluids inside the return rolls 18, for example in an interspace thereof.

In possible implementations, the return rolls 18 can be disposed alternate in opposite positions inside the cooling chamber 40. In this case the return rolls 18 can be disposed in rows, for example parallel to each other (fig. 2).

In forms of embodiment described with reference to fig. 2, the nebulization member 16 can be interposed between at least two rows of return rolls 18.

In some forms of embodiment, the nebulization member 16 can comprise a plurality of delivery elements 38 and a collector 50 to which the delivery elements 38 are connected and which provides to feed the liquid to be nebulized to the delivery elements 38.

According to some forms of embodiment, the delivery elements 38 can comprise a tubular bar on which a plurality of nebulization nozzles are mounted and which can be selectively coupled to the collector 50 so as to feed the liquid to be nebulized.

In some forms of embodiment, the delivery elements 38 can be stably connected to the collector 50.

In possible variant forms of embodiment, the delivery elements 38 can be removably connected to the collector 50. In this way, if it is necessary to replace one of the delivery elements 38, it is not necessary to interrupt the whole production process of the bituminous membrane 20: it is enough to disconnect only the delivery element 38 to be replaced.

In some forms of embodiment, the cooling unit 11 comprises a ventilation device 17 configured to deliver a stream of air onto at least one surface of the bituminous membrane 20 nebulized by the nebulization member 16. The ventilation device 17 is also configured to emit a stream of air suitable to diffuse the particles delivered by the nebulization member 16 into the compartment 39 defined by the cooling chamber 40.

The ventilation device 17 can be the air blade type, and provides to remove possible residues of humidity that can be deposited on the bituminous membrane 20 being worked. The action of the ventilation device 17 therefore prevents the bituminous membrane 20 from getting wet, generating a heat insulating layer on the surface thereof.

According to possible solutions, the ventilation device 17 can be configured to emit a stream of laminar air which is directed tangentially to the development of the bituminous membrane 20.

The combined action of the nebulization member 16 and the ventilation device 17 further speeds up the evaporation of the micro-drops on the bituminous membrane 20. This allows to reduce the overall times for cooling, drying and consequently producing the bituminous membrane 20.

In some forms of embodiment, the ventilation device 17 comprises a plurality of air delivery elements 43 disposed in pairs on opposite sides of the return segments 42 of the bituminous membrane 20.

The air delivery elements 43 can be configured to hit both surfaces of the bituminous membrane 20 with two opposite streams of air.

In forms of embodiment described in accordance with fig. 2, the cooling unit 11 can comprise internal monitoring devices, configured to monitor environmental parameters of the cooling chamber 40.

According to some forms of embodiment of the present invention, the internal monitoring devices can comprise at least one of either a temperature sensor 19 and/or a humidity sensor 23.

The combined use of the temperature sensor 19 and the humidity sensor 23 can allow a constant monitoring of the temperature and humidity by users, by means of suitable interface means, and/or the automatic activation of alarm mechanisms to signal anomalous conditions inside the cooling chamber 40.

In some forms of embodiment, the cooling chamber 40 can comprise at least a suction device 22, configured to suck up the fluid present in the cooling chamber 40 and to discharge it to the outside. The suction of the fluid present in the cooling chamber 40 can be controlled to manage the level of humidity in it, and to prevent the bituminous membrane 20 from getting wet.

According to a possible form of embodiment of the present invention, the suction device 22 is located in the upper part of the cooling chamber 40 so as to obtain an effective suction and humidity control.

The positioning of the suction device 22 in the upper part of the cooling chamber 40 allows to discharge the hot cooling fluid that generally becomes stratified in the upper part of the cooling chamber 40.

The suction device 22 can comprise one, two (fig. 2) or more suction fans 22a, or extraction towers, located for example in different zones of the cooling chamber 40, allowing a homogenous and widespread suction at different points of the cooling chamber 40.

In forms of embodiment described according to fig. 2, the cooling unit 11 can comprise monitoring devices to monitor the temperature of the bituminous membrane 20, in this case an entrance temperature sensor 44 and an exit temperature sensor 45, configured to evaluate the temperature of the bituminous membrane 20 respectively at entrance to and exit from the cooling chamber 40.

In the form of embodiment shown in fig. 2, the entrance temperature sensor 44 and the exit temperature sensor 45 are positioned outside the cooling chamber 40, respectively near the entrance aperture 41 and exit aperture 52. In this way it is possible to verify the suitable reduction in temperature obtained by the cooling unit 11.

In some forms of embodiment, a control unit 46 can be provided, configured to manage the cooling of the bituminous membrane 20 automatically, acting on at least one of either the nebulization member 16, the ventilation device 17, the suction device 22 or the temperature of the return rolls 18, according to the information arriving from the internal monitoring devices 19, 23 or the membrane temperature monitoring devices 44, 45.

By way of example, the control unit 46 can be configured to automatically activate the suction device 22 according to the temperature and humidity measured by the internal monitoring devices 19, 23. In this way it is possible to activate the suction device 22 to remove from the cooling chamber 40 air with too high a humidity content or temperature.

According to possible forms of embodiment of the present invention, the control unit 46 is connected at least to the nebulization member 16, the humidity sensor 23 and the suction device 22, to control at least the humidity present in the cooling chamber 40 and to manage the drive of the nebulization member 16 and the suction device 22 and to regulate the level of humidity. Merely by way of example, the control unit 46 is configured to keep a controlled humidity inside the cooling chamber 40 of between 90% and 95%.

According to possible solutions, the control unit 46 is connected to drive members to activate the suction device 22, in order to adjust the entity of suction of the fluid inside the cooling chamber 40, for example by adjusting the speed of rotation of the drive members.

In this way, if the level of humidity in the cooling chamber 40 exceeds 95%, the suction devices 22 are activated/adjusted to remove the fluid and reduce the overall humidity in the cooling chamber 40. This prevents generating conditions that can wet the surface of the bituminous membrane 20, which therefore requires subsequent drying operations.

In forms of embodiment of the production plant 10 described with reference to fig. 1, the unwinding unit 12 can comprise an unwinding roll 32 and drive means configured to make the unwinding roll 32 rotate, allowing to unwind the roll 31.

In some forms of embodiment, the production plant 10 can comprise an intermediate passage unit 14, configured to transport the bituminous membrane 20 from the application unit 13 to the cooling unit 11.

In possible implementations described according to fig. 1, the intermediate passage unit 14 can comprise finishing devices for the surface of the bituminous membrane 20, and pre-cooling rolls 36 configured to at least partly reduce the temperature of the bituminous membrane 20 before it arrives at the cooling unit 11.

In some forms of embodiment, the winding unit 15 comprises a winding drive member, not shown, configured at least to make the winding roll 37 rotate.

The winding roll 37 can be made to rotate for example by a suitable drive member.

In some forms of embodiment, at least one of either the unwinding unit 12, the application unit 13, the intermediate passage unit 14 or the winding unit 15 can comprise rolls 35 configured and positioned according to the technological requirements of the different operating units, to define a desired path of the support 30 or the bituminous membrane 20.

In possible implementations, the rolls 35 can be configured to contribute actively to the movement of the support 30/bituminous membrane 20 through the production plant 10.

In some forms of embodiment, the control unit 46 can be configured to vary the speed of rotation of the winding roll 37 and/or the unwinding roll 32, consequently modifying the speed of movement of the bituminous membrane 20, depending on the temperature detected by the entrance temperature sensor 44 and the exit temperature sensor 45. In this way it is possible to speed up the whole production process of the bituminous membrane 20 as a function of the suitable cooling thereof.

It is clear that modifications and/or additions of parts may be made to the cooling unit for bituminous membranes, the plant to produce bituminous membranes comprising said cooling unit and the corresponding production method as described heretofore, without departing from the field and scope of the present invention.

It is also clear that, although the present invention has been described with reference to some specific examples, a person of skill in the art shall certainly be able to achieve many other equivalent forms of cooling unit for bituminous membranes, the plant to produce bituminous membranes comprising said cooling unit and the corresponding production method, having the characteristics as set forth in the claims and hence all coming within the field of protection defined thereby.

## Claims

1. Cooling unit for bituminous membranes (20), insertable in a plant (10) for producing said bituminous membranes (20), comprising:
- a substantially closed cooling chamber (40), through which, during use, at least one of said bituminous membranes (20) is made to transit;
- a nebulization member (16), **characterized in that** the nebulization member (16) is configured to nebulize a fluid and to deliver it into said cooling chamber (40) in the form of mist and with a delivery pressure of at least 50bar so as to cool said bituminous membrane (20).

2. Cooling unit as in claim 1, **characterized in that** said nebulization member (16) is configured to deliver particles of said fluid with a size less than 20micron.

3. Cooling unit as in any claim hereinbefore, **characterized in that** said cooling chamber (40) comprises internal monitoring devices (19, 23), configured to determine environmental conditions inside said cooling chamber (40).

4. Cooling unit as in claim 3, **characterized in that** said internal monitoring devices comprise at least a humidity sensor (23) configured to detect the humidity present in said cooling chamber (40).

5. Cooling unit as in any claim hereinbefore, **characterized in that** said cooling chamber (40) comprises a suction device (22), configured to suck up and discharge to the outside the fluid present in said cooling chamber (40) and to manage the level of humidity in said cooling chamber (40).

6. Cooling unit as in claim 4 and 5, **characterized in that** it comprises a control unit (46) connected at least to said nebulization member (16), to said humidity sensor (23) and to said suction device (22) to control at least the humidity present in said cooling chamber (40) and to manage the drive of said nebulization member (16) and said suction device (22) and to regulate the level of humidity.

7. Cooling unit as in claim 3, 4 or 6, **characterized in that** said internal monitoring devices comprise at least a temperature sensor (19) configured to detect the temperature present in said cooling chamber (40).

8. Cooling unit as in any claim hereinbefore, **characterized in that** it comprises a plurality of return rolls (18) that define return segments of said bituminous membrane (20), said return rolls (18) being provided with a circumferential surface that during use is in contact with said bituminous membrane (20) and maintained constantly cooled by cooling means.

9. Cooling unit as in any claim hereinbefore, **characterized in that** it comprises at least ventilation device (17) configured to deliver a stream of air onto said at least one surface of said bituminous membrane (20) and to diffuse said fluid into the cooling chamber (40).

10. Cooling unit as in any claim hereinbefore, **characterized in that** it comprises monitoring devices (44, 45) to monitor the temperature of said bituminous membrane (20), configured to determine the temperature of the bituminous membrane (20) in a plurality of positions inside and/or outside said cooling chamber (40).

11. Plant for producing bituminous membranes (20), **characterized in that** it comprises at least:
- a unit (13) for applying bituminous material on a support (30) to obtain a bituminous membrane (20), said application unit (13) being configured to maintain said bituminous material at a temperature higher than the melting temperature;
- a winding unit (15) configured to wind said bituminous membrane (20) on a winding roller (37);
- a cooling unit (11) as in any claim from 1 to 10, interposed between said application unit (13) and said winding unit (15).

12. Method to produce a bituminous membrane (20), comprising at least:
- a step of applying a bituminous material on a support (30) to obtain a bituminous membrane (20);
- a step of cooling said bituminous membrane (20);
- a step of winding said cooled bituminous membrane (20) around a winding roller (37);
**characterized in that** the step of cooling provides to make at least one bituminous membrane (20) transit in a cooling chamber (40), and to nebulize and subsequently deliver into the cooling chamber (40) a fluid in the form of mist and with a delivery pressure of at least 50bar in order to cool the bituminous membrane (20).

13. Method as in claim 12, **characterized in that** it provides to deliver particles of said fluid with sizes less than 20micron.

14. Method as in claim 12 or 13, **characterized in that** it comprises controlling the humidity present in said cooling chamber (40) to a value equal to or less than 90% - 95%.

15. Method as in claim 12, 13 or 14, **characterized in that** it comprises a suction step of the fluid contained in said cooling chamber (40) to regulate the level of humidity present therein.

## Patentansprüche

1. Kühleinheit für bituminöse Membranen (20), die in einer Anlage (10) zum Herstellen der bituminösen Membranen (20) einsetzbar ist, umfassend:
- eine im Wesentlichen geschlossene Kühlkammer (40), die während der Verwendung mindestens eine der bituminösen Membranen (20) durchquert;
- ein Zerstäubungselement (16), **dadurch gekennzeichnet, dass** das Zerstäubungselement (16) dazu eingerichtet ist, ein Fluid zu zerstäuben und dieses in Form von Nebel und mit einem Förderdruck von mindestens 50 bar in die Kühlkammer (40) zu fördern, um die bituminösen Membranen (20) zu kühlen.

2. Kühleinheit nach Anspruch 1, **dadurch gekennzeichnet, dass** das Zerstäubungselement (16) dazu eingerichtet ist, Partikel des Fluids mit einer Größe von weniger als 20 Mikrometern abzugeben.

3. Kühleinheit nach einem der vorhergehenden Ansprüche, **dadurch gekennzeichnet, dass** die Kühlkammer (40) interne Überwachungsvorrichtungen (19, 23) umfasst, die dazu eingerichtet sind, Umgebungsbedingungen innerhalb der Kühlkammer (40) zu bestimmen.

4. Kühleinheit nach Anspruch 3, **dadurch gekennzeichnet, dass** die internen Überwachungsvorrichtungen mindestens einen Feuchtigkeitssensor (23) umfassen, der dazu eingerichtet ist, die in der Kühlkammer (40) vorliegende Feuchtigkeit zu erfassen.

5. Kühleinheit nach einem der vorhergehenden Ansprüche, **dadurch gekennzeichnet, dass** die Kühlkammer (40) eine Saugeinrichtung (22) umfasst, die dazu eingerichtet ist, das in der Kühlkammer (40) vorliegende Fluid anzusaugen und nach außen abzugeben und die Feuchtigkeit in der Kühlkammer (40) zu regeln.

6. Kühleinheit nach Anspruch 4 und 5, **dadurch gekennzeichnet, dass** diese eine Steuereinheit (46) umfasst, die zumindest mit dem Zerstäubungselement (16), mit dem Feuchtigkeitssensor (23) und mit der Saugvorrichtung (22) verbunden ist, um zumindest die in der Kühlkammer (40) vorliegende Feuchtigkeit zu steuern und den Antrieb des Zerstäubungselements (16) und der Saugvorrichtung (22) zu steuern und das Feuchtigkeitsniveau zu regulieren.

7. Kühleinheit nach Anspruch 3, 4 oder 6, **dadurch gekennzeichnet, dass** die internen Überwachungsvorrichtungen mindestens einen Temperatursensor (19) umfassen, der dazu eingerichtet ist, die in der Kühlkammer (40) vorliegende Temperatur zu erfassen.

8. Kühleinheit nach einem der vorhergehenden Ansprüche, **dadurch gekennzeichnet, dass** sie eine Mehrzahl von Umlenkrollen (18) umfasst, die Rückführungssegmente der bituminösen Membran (20) definieren, wobei die Umlenkrollen (18) mit einer Umfangsfläche versehen sind, die während des Gebrauchs in Kontakt mit der bituminösen Membran (20) steht und durch Kühleinrichtungen konstant kühl gehalten wird.

9. Kühleinheit nach einem der vorhergehenden Ansprüche, **dadurch gekennzeichnet, dass** diese wenigstens eine Belüftungsvorrichtung (17) umfasst, die dazu eingerichtet ist, einen auf die wenigstens eine Oberfläche der bituminösen Membran (20) auftreffenden Luftstrom bereitzustellen und das Fluid in die Kühlkammer (40) zu diffundieren.

10. Kühleinheit nach einem der vorhergehenden Ansprüche, **dadurch gekennzeichnet, dass** sie Überwachungseinrichtungen (44, 45) zum Überwachen der Temperatur der bituminösen Membran (20) umfasst, die dazu eingerichtet sind, die Temperatur der bituminösen Membran (20) in einer Vielzahl von Positionen innerhalb und/oder außerhalb der Kühlkammer (40) zu bestimmen.

11. Anlage zum Herstellen von bituminösen Membranen (20), **dadurch gekennzeichnet, dass** diese zumindest umfasst:
- eine Einheit (13) zum Auftragen von bituminösem Material auf einen Träger (30), um eine bituminöse Membran (20) zu erhalten, wobei die Auftrageeinheit (13) dazu eingerichtet ist, das bituminöse Material bei einer Temperatur oberhalb der Schmelztemperatur zu halten;
- eine Wickeleinheit (15), die zum Aufwickeln der bituminösen Membran (20) auf eine Wickelrolle (37) eingerichtet ist;
- eine Kühleinheit (11) nach einem der Ansprüche 1 bis 10, die zwischen der Auftrageeinheit (13) und der Wickeleinheit (15) angeordnet ist.

12. Verfahren zum Herstellen einer bituminösen Membran (20), das zumindest umfasst:
- einen Schritt des Auftragens eines bituminösen Materials auf einen Träger (30), um eine bituminöse Membran (20) zu erhalten;
- einen Schritt des Kühlens der bituminösen Membran (20);
- einen Schritt des Aufwickelns der abgekühlten bituminösen Membran (20) auf eine Wickelrolle (37);
**dadurch gekennzeichnet, dass** der Schritt des Kühlens vorsieht, dass mindestens eine bituminöse Membran (20) in eine Kühlkammer (40) bewegt wird, und ein Fluid zerstäubt und daraufhin der Kühlkammer (40) in Form von Nebel und mit einem Förderdruck von mindestens 50 bar zugeführt wird, um die bituminöse Membran (20) zu kühlen.

13. Verfahren nach Anspruch 12, **dadurch gekennzeichnet, dass** dieses vorsieht, Partikel mit einer Größe von weniger als 20 Mikrometer bereitzustellen.

14. Verfahren nach Anspruch 12 oder 13, **dadurch gekennzeichnet, dass** diese ein Steuern der in der Kühlkammer (40) vorliegenden Feuchtigkeit auf einen Wert von gleich oder weniger als 90% - 95% umfasst.

15. Verfahren nach Anspruch 12, 13 oder 14, **dadurch gekennzeichnet, dass** es einen Absaugschritt des in der Kühlkammer (40) enthaltenen Fluids umfasst, um das darin vorliegende Feuchtigkeitsniveau zu regulieren.

## Revendications

1. Unité de refroidissement pour membranes bitumineuses (20), pouvant être insérée dans une installation (10) destinée à la production desdites membranes bitumineuses (20), comprenant :
- une chambre de refroidissement sensiblement fermée (40), par laquelle, pendant l'utilisation, au moins une desdites membranes bitumineuses (20) doit transiter ;
- un élément de nébulisation (16), **caractérisée en ce que** l'élément de nébulisation (16) est conçu pour nébuliser un fluide et pour l'alimenter dans ladite chambre de refroidissement (40) en forme de brouillard et avec une pression d'alimentation d'au moins 50 bar, de façon à refroidir ladite membrane bitumineuse (20).

2. Unité de refroidissement selon la revendication 1, **caractérisée en ce que** ledit élément de nébulisation (16) est conçu pour alimenter des particules dudit fluide avec une taille inférieure à 20 microns.

3. Unité de refroidissement selon n'importe laquelle des revendications précédentes, **caractérisée en ce que** ladite chambre de refroidissement (40) comprend des dispositifs de surveillance interne (19, 23), conçus pour déterminer les conditions d'environnement à l'intérieur de ladite chambre de refroidissement (40).

4. Unité de refroidissement selon la revendication 3, **caractérisée en ce que** lesdits dispositifs de surveillance interne comprennent au moins un capteur d'humidité (23) conçu pour détecter l'humidité présente dans ladite chambre de refroidissement (40).

5. Unité de refroidissement selon n'importe laquelle des revendications précédentes, **caractérisée en ce que** ladite chambre de refroidissement (40) comprend un dispositif d'aspiration (22), conçu pour aspirer et décharger à l'extérieur le fluide présent dans ladite chambre de refroidissement (40) et pour gérer le niveau d'humidité dans ladite chambre de refroidissement (40).

6. Unité de refroidissement selon la revendication 4 et 5, **caractérisée en ce qu'**elle comprend une unité de commande (46) reliée au moins audit élément de nébulisation (16), audit capteur d'humidité (23) et audit dispositif d'aspiration (22) afin de contrôler l'humidité présente dans ladite chambre de refroidissement (40) et de commander l'actionnement dudit dispositif de nébulisation (16) et dudit dispositif d'aspiration (22) et de réguler le niveau d'humidité.

7. Unité de refroidissement selon la revendication 3, 4 ou 6, **caractérisée en ce que** lesdits dispositifs de surveillance interne comprennent au moins un capteur d'humidité (19) conçu pour détecter la température présente dans ladite chambre de refroidissement (40).

8. Unité de refroidissement selon n'importe laquelle des revendications précédentes, **caractérisée en ce qu'**elle comprend une pluralité de rouleaux de renvoi (18) qui définissent des segments de renvoi de ladite membrane bitumineuse (20), lesdits rouleaux de renvoi (18) étant pourvus d'une surface circonférentielle qui, lors de l'utilisation, est en contact avec ladite membrane bitumineuse (20) et maintenue constamment refroidie par des moyens de refroidissement.

9. Unité de refroidissement selon n'importe laquelle des revendications précédentes, **caractérisée en ce qu'**elle comprend au moins un dispositif de ventilation (17) conçu pour alimenter un flux d'air sur ladite au moins une surface de ladite membrane bitumineuse (20) et à la diffuser ledit fluide dans la chambre de refroidissement (40).

10. Unité de refroidissement selon n'importe laquelle des revendications précédentes, **caractérisée en ce qu'**elle comprend des dispositifs de surveillance (44, 45) pour surveiller la température de ladite membrane bitumineuse (20), conçue pour déterminer la température de la membrane bitumineuse (20) dans une pluralité de positions à l'intérieur et/ou à l'extérieur de ladite chambre de refroidissement (40).

11. Installation de production de membranes bitumineuses (20), **caractérisée en ce qu'**elle comprend au moins :
- une unité (13) d'application de matériau bitumineux sur un support (30) pour obtenir une membrane bitumineuse (20), ladite unité d'application (13) étant conçue pour maintenir ledit matériaux bitumineux à une température supérieure à la température de fusion ;
- une unité d'enroulement (15) configurée pour enrouler ladite membrane bitumineuse (20) sur un rouleau d'enroulement (37) ;
- une unité de refroidissement (11) selon n'importe laquelle des revendications 1 à 10, interposée entre ladite unité d'application (13) et ladite unité d'enroulement (15).

12. Procédé de production d'une membrane bitumineuse (20), comprenant au moins :
- une étape d'application d'un matériau bitumineux sur un support (30) pour obtenir une membrane bitumineuse (20) ;
- une étape de refroidissement de ladite membrane bitumineuse (20) ;
- une étape d'enroulement ladite membrane bitumineuse refroidie (20) autour d'un rouleau d'enroulement (37) ;
**caractérisé en ce que** l'étape de refroidissement permet de faire transiter au moins une membrane bitumineuse (20) dans une chambre de refroidissement (40), et de nébuliser et ensuite alimenter dans la chambre de refroidissement (40) un fluide en forme de brouillard et avec une pression d'alimentation d'au moins 50 bar afin de refroidir la membrane bitumineuse (20).

13. Procédé selon la revendication 12, **caractérisé en ce qu'**il permet d'alimenter des particules dudit fluide avec des tailles inférieures à 20 microns.

14. Procédé selon la revendication 12 ou 13, **caractérisé en ce qu'**il comprend la régulation de l'humidité présente dans ladite chambre de refroidissement (40) sur une valeur égale ou inférieure à 90 % - 95 %.

15. Procédé selon la revendication 12, 13 ou 14, **caractérisé en ce qu'**il comprend une étape d'aspiration du fluide contenu dans ladite chambre de refroidissement (40) pour réguler le niveau d'humidité présent dans celle-ci.
